# EUROPEAN PATENT SPECIFICATION

(11) **EP 1 368 802 B1**
(45) Date of publication and mention of the grant of the patent: **18.10.2006**
(21) Application number: 01993937.0
(22) Date of filing: 29.10.2001
(51) Int. Cl.: G09G 3/30

(54) **DISPLAY DEVICE**
ANZEIGEEINRICHTUNG
DISPOSITIF D'AFFICHAGE

(30) Priority: 07.11.2000 EP 00203895
(43) Date of publication of application: 10.12.2003
(73) Proprietor: Koninklijke Philips Electronics N.V., 5621 BA Eindhoven (NL)
(72) Inventor: LIEDENBAUM, Coen, T., H., F., NL-5656 AA Eindhoven (NL)
(74) Representative: Deguelle, Wilhelmus H. G.
(86) International application number: PCT/EP2001/012593
(87) International publication number: WO 2002/039479

(56) References cited:
- EP-A- 1 003 221
- WO-A-96/41322
- WO-A-99/09452
- US-A- 6 037 718
- US-A- 6 140 765
- US-B1- 6 229 505
- PATENT ABSTRACTS OF JAPAN vol. 1999, no. 12, 29 October 1999 (1999-10-29) & JP 11 185957 A (SANYO ELECTRIC CO LTD), 9 July 1999 (1999-07-09)
- LIEDENBAUM C T H F ET AL: "Progress in polymer light-emitting devices at Philips" ORGANIC LIGHT-EMITTING MATERIALS AND DEVICES IV, SAN DIEGO, CA, USA, 31 JULY-2 AUG. 2000, vol. 4105, pages 1-8, XP009009480 Proceedings of the SPIE - The International Society for Optical Engineering, 2001, SPIE-Int. Soc. Opt. Eng, USA ISSN: 0277-786X

## Description

The invention relates to a display device having pixel elements, and to a display apparatus comprising such a display device. Each of WO-A-96/41322 and WO-A-99/09452 discloses a display comprising a light source, a liquid crystal and phosphor.

Display devices such as Cathode Ray Tubes (CRTs), Liquid Crystal Displays (LCDs), etc. are well-known. Each type of display has its specific advantages but also its specific disadvantages. For example, CRTs are quite bulky and consume relatively much energy, whereas LCDs have a limited viewing angle and brightness.

It is an object of the invention to provide a display device that mitigates the above-mentioned disadvantages. To this end, the invention provides a display device as defined in claim 1. In this way, a display device is provided that has a good viewing angle and good brightness while combining a low power consumption and a limited display size.

Advantageous embodiments are defined in the dependent claims.

These and other aspects of the invention will be elucidated with reference to the embodiments described hereinafter.

In the drawings,
Fig. 1 shows schematically an embodiment of a display apparatus comprising a display device according to the invention;
Fig. 2 shows experimental results concerning a polymer that can be used in a display device according to the invention; and
Fig. 3 shows another embodiment of a display device according to the invention.

In general, like reference numerals identify like elements.

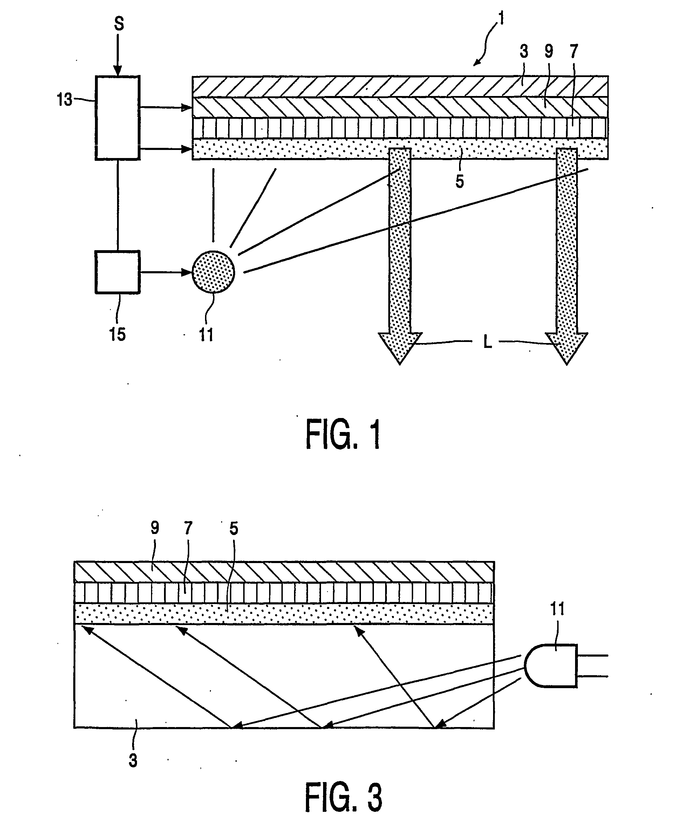

Fig. 1 shows schematically the display device 1 according to the invention. A substrate 3 is provided with a stack of layers including a layer 5 of transparent electrode material of, e.g. Indium Tin Oxide (ITO), a thin layer 7 of fluorescent material, e.g. fluorescent polymer, a dye or an inorganic compound like a phosphor, and a layer 9 that forms a back electrode. A source for generating electromagnetic radiation, here for example a UV source 11, is used to induce excitations, so-called excitons, in the layer 7 of fluorescent material. The source can be comprised in the device, but may also be an external source such as e.g. the sun. Such excitons may also be induced by the application of an electric field. Within their characteristic time, these excitations will normally decay to the lowest energy state, i.e. the ground state, of the polymer. In doing so, light, indicated by arrows L in the Figure, is emitted at a wavelength corresponding to an energy difference between an excited state and the ground state. It has been observed experimentally that, if a relatively large electric field is applied to the excitons, the excitons will dissociate into pairs of an electron and a hole (in the case of polymers) and will not decay radiatively. This quenching or inhibition of the normal decay of excitons can be used to modulate light, and a display device can advantageously be based on it. A display apparatus is provided if a display signal S, e.g. a conventional television signal, is used as an input signal for a device 13, which converts the video signal into a modulating voltage that is applied to the electrodes 5,9. The light source 11 is controlled and modulated in relation to the modulating voltage by means of device 15.

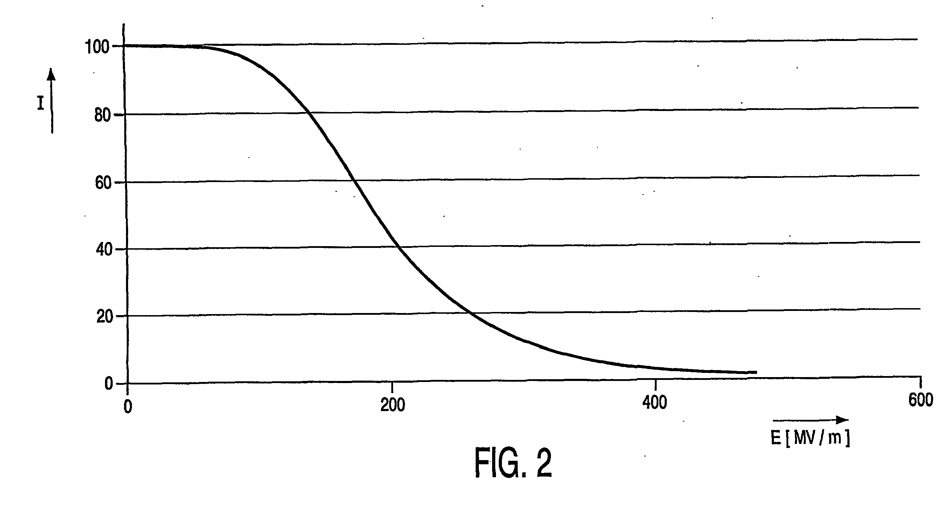

Fig. 2 shows experimental results of the light output of a 50 nm thick layer of a yellow emissive conjugated polymer (a Poly Phenylene Vinylene (PPV) derivative) as a function of the applied electric field, when this layer is optically excited. The Figure shows that the intensity I of the emitted light is reduced, when the strength V of the applied electric field is increased (here expressed in Mega Volts/meter). Above a certain value of the electric field, the light output is almost reduced to zero. This experiment was repeated for different layer thicknesses of the fluorescent material, varying between 20 and 90 nm, and different types of fluorescent materials. The outcome of the experiments was always the same: the intensity of the emitted light is reduced when the strength of the electric field is increased and, above a certain field strength, the light output is almost reduced to zero (quenched). A low value of the layer thickness, e.g. 25 nm is preferable in view of a consequent reduction of the driving voltage.

Since the luminescence can be substantially quenched and the curves have a quite moderate slope, the effect is suited for use in displays. By modulation of the amplitude or a pulse width of the applied field, grey scales can be readily induced. If fluorescent materials are used that emit light at different wavelengths, a device emitting at different colors can be created. Such materials can be applied to the substrate by means of, e.g. printing techniques.

A display device having pixels is created e.g. if the electrode layers (5,9) are structured as a matrix, i.e. one electrode layer comprising rows and the other electrode layer comprising columns. Also the display device may comprise pixels in the form of segments that are individually addressable.

In the case of graphic displays, which are suitable for displaying a high information content, active matrix driving may be a preferred method. Such active matrix addressing is known, for example from Thin Film Transistor LCD displays. Each pixel is addressed by one transistor and a hold capacitor. The electric field across the fluorescent layer is then the parameter that is modulated.

Such a display device has the following features:
- no viewing angle dependence (fluorescent radiation follows a lambertian distribution curve)
- all colors are possible (currently, many fluorescent materials emitting light in a huge range of various colors are available)
- high resolution (the resolution is determined by the pitch of the electrodes, which can be very small when photolithographic processes are used)
- fast response speeds (the effect is instantaneous)
- low power (in principle, no current flows, high-efficiency lamps are applied)

Fig. 3 shows an advantageous embodiment of the display device according to the invention. A transparent substrate 3 is provided with a stack comprising a layer 5 of transparent electrode material, e.g. ITO or PEDOT (a transparent conductive polymer), a layer 7 of fluorescent material and a further layer 9 that forms the back electrode. The transparent substrate 3 is irradiated from a side by a source 11 for generating electromagnetic radiation, e.g. a blue emitting Light Emitting Device (LED). Due to internal reflection within the substrate, the blue light from the LED irradiates the layer 7 of fluorescent material. If an appropriate electric field is applied to the electrode layers 5, 9, the emitted light can be modulated and a picture is displayed.

In summary, the invention relates to a display device 1 having pixel elements comprising a luminescent material 7 for emitting light when excited by, e.g. electromagnetic radiation. The pixel are provided with electrodes 5,9 which modulate an emission of light by the luminescent material 7 by applying an electric field.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The mere fact that certain measures are recited in mutually different dependent claims does not indicate that a combination of these measures cannot be used to advantage.

## Claims

1. A display device (1) having pixel elements comprising a luminescent material (7) for emitting light when excited by a means for generating electromagnetic radiation, each one of said pixel elements being provided with means (5,9) for applying an electric field to said luminescent material (7) for modulating an emission of light by the luminescent material.

2. A display device (1) as claimed in claim 1, wherein the means (11) for generating electromagnetic radiation are comprised in the display device.

3. A display device (1) as claimed in claim 1, wherein the luminescent material is excited by a means for generating an electric field.

4. A display device (1) as claimed in claim 3, wherein the pixel elements further comprise electrodes (5,9) which are provided to the luminescent material (7), the electric field being generated by applying a voltage to the electrodes (5,9).

5. A display device (1) as claimed in claim 4, wherein at least one of the electrodes (5,9) comprises a transparent material.

6. A display device as claimed in claim 1, wherein a thickness of a layer of the luminescent material (7) ranges between 10 and 100 nm.

7. A display (1) device as claimed in claim 1, wherein an electric field strength of the electric field varies between zero and 400 MV/m.

8. A display apparatus, comprising:
- a display device (1) as claimed in claim 1;
- means (15) for controlling said means (11) for generating electromagnetic radiation; and
- means (13) for controlling said means (5,9) for applying an electric field in response to a display signal (S) applied to the display apparatus (1).

## Patentansprüche

1. Anzeigeeinrichtung (1), welche Pixelelemente mit einem lumineszierenden Material (7) aufweist, um durch Mittel (11) zur Erzeugung elektromagnetischer Strahlung im angeregten Zustand Licht zu emittieren, wobei jedes Pixelelement mit Mitteln (5,9) versehen ist, um an das lumineszierende Material (7) ein elektrisches Feld anzulegen, um durch das lumineszierende Material eine Lichtemission zu modulieren.

2. Anzeigeeinrichtung (1) nach Anspruch 1, wobei die Mittel (11) zur Erzeugung elektromagnetischer Strahlung in der Anzeigeeinrichtung enthalten sind.

3. Anzeigeeinrichtung (1) nach Anspruch 1, wobei das lumineszierende Material durch Mittel zur Erzeugung eines elektrischen Feldes angeregt wird.

4. Anzeigeeinrichtung (1) nach Anspruch 3, wobei die Pixelelemente weiterhin Elektroden (5,9) aufweisen, welche für das lumineszierende Material (7) vorgesehen sind, wobei das elektrische Feld durch Anlegen einer Spannung an die Elektroden (5,9) erzeugt wird.

5. Anzeigeeinrichtung (1) nach Anspruch 4, wobei mindestens eine der Elektroden (5,9) ein transparentes Material enthält.

6. Anzeigeeinrichtung (1) nach Anspruch 1, wobei eine Dicke einer Schicht des lumineszierenden Materials (7) im Bereich zwischen 10 und 100 nm liegt.

7. Anzeigeeinrichtung (1) nach Anspruch 1, wobei eine elektrische Feldstärke des elektrischen Felds zwischen null und 400 MV/m liegt.

8. Anzeigegerät mit:
- einer Anzeigeeinrichtung (1) nach Anspruch 1;
- Mitteln (15) zur Steuerung der Mittel (11) zur Erzeugung elektromagnetischer Strahlung; sowie
- Mitteln (13) zur Steuerung der Mittel (5,9) zum Anlegen eines elektrischen Feldes in Reaktion auf ein, dem Anzeigegerät (1) zugeführtes Anzeigesignal (S).

## Revendications

1. Dispositif d'affichage (1) ayant des éléments de pixel comprenant une substance luminescente (7) pour émettre de la lumière dans le cas d'excitation par des moyens pour générer du rayonnement électromagnétique, chacun desdits éléments de pixel étant pourvu de moyens (5, 9) pour appliquer un champ électrique à ladite substance luminescente (7) pour moduler une émission de lumière par la substance luminescente.

2. Dispositif d'affichage (1) selon la revendication 1, dans lequel les moyens (11) pour générer du rayonnement électromagnétique sont incorporés dans le dispositif d'affichage.

3. Dispositif d'affichage (1) selon la revendication 1, dans lequel la substance luminescente est excitée par des moyens pour générer un champ électrique.

4. Dispositif d'affichage (1) selon la revendication 3, dans lequel les éléments de pixel comprennent encore des électrodes (5, 9) qui sont fournies à la substance luminescente (7), le champ électrique étant généré par l'application d'une tension aux électrodes (5, 9).

5. Dispositif d'affichage (1) selon la revendication 4, dans lequel au moins une des électrodes (5, 9) comprend un matériau transparent.

6. Dispositif d'affichage (1) selon la revendication 1, dans lequel une épaisseur d'une couche de la substance luminescente (7) se situe dans la gamme comprise entre 10 nm et 100 nm.

7. Dispositif d'affichage (1) selon la revendication 1, dans lequel une puissance de champ électrique du champ électrique varie entre zéro et 400 MV/m.

8. Dispositif d'affichage comprenant:
- un dispositif d'affichage (1) selon la revendication 1;
- des moyens (15) pour commander lesdits moyens (11) de manière à générer du rayonnement électromagnétique, et
- des moyens (13) pour commander lesdits moyens (5, 9) de manière à appliquer un champ électrique en réaction à un signal d'affichage (S) qui est appliqué au dispositif d'affichage (1).
